# EUROPÄISCHE PATENTSCHRIFT

(11) **EP 3 281 753 B1**
(45) Veröffentlichungstag und Bekanntmachung des Hinweises auf die Patenterteilung: **06.10.2021**
(21) Anmeldenummer: 16306052.8
(22) Anmeldetag: 12.08.2016
(51) Int. Cl.: B25J 19/00

(54) **ROBOTER**
ROBOT
ROBOT

(43) Veröffentlichungstag der Anmeldung: 14.02.2018
(73) Patentinhaber: Schneider Electric Industries SAS, 92500 Rueil-Malmaison (FR)
(72) Erfinder: Hombach, Christian, 97261 Güntersleben (DE); Böttcher, Felix, 97855 Rettersheim (DE); Kohrmann, Rainer, 97877 Wertheim (DE); Ritschel, Rainer, 64354 Reinheim (DE)
(74) Vertreter: Manitz Finsterwald Patent- und Rechtsanwaltspartnerschaft mbB

(56) Entgegenhaltungen:
- EP-A1- 2 829 367
- JP-A- 2006 138 678
- JP-A- 2009 255 194
- JP-A- 2013 111 694

## Beschreibung

Die vorliegende Erfindung betrifft einen Manipulator, insbesondere einen Roboter, bevorzugt einen Delta-Roboter. Der Manipulator ist insbesondere für Hygieneumgebungen geeignet und umfasst eine Manipulatormechanik, beispielsweise einen Roboterarm, einen Motor und ein Getriebe mit einem Getriebegehäuse. In dem Getriebegehäuse ist ein vorbestimmtes Volumen eines Schmiermittels vorhanden und das Getriebe steht mit dem Motor in Wirkverbindung. Das Getriebe ist ausgebildet, die Manipulatormechanik mittels eines Abtriebs anzutreiben.

Manipulatoren, wie beispielsweise Delta-Roboter, werden in vielen automatisierten Bereichen eingesetzt, unter anderem zur Herstellung und Verpackung von Lebensmittelprodukten. Bei der Produktion von Lebensmitteln oder in anderen Bereichen, die eine besondere Hygiene erfordern, ist es von besonderer Bedeutung, Verschmutzungen der Produkte zu vermeiden. Insbesondere ist es zu vermeiden, dass Schmiermittel aus dem Getriebegehäuse auf die Produkte bzw. die Lebensmittel gelangt.

Herkömmlicherweise wird versucht, das in dem Getriebegehäuse vorhandene Schmiermittel beispielsweise durch zusätzliche Dichtungen in dem Getriebegehäuse zu halten. Diese Dichtungen können z.B. um eine Abtriebswelle des Getriebegehäuses herum angeordnet sein und das Schmiermittel auf diese Weise in dem Getriebegehäuse halten.

Nachteiligerweise werden solche Dichtungen durch die Rotation der Abtriebswelle abgenutzt, wodurch die Dichtigkeit mit steigender Betriebsdauer herabgesetzt werden kann. Ist die Dichtigkeit zwischen der Dichtung und der Abtriebswelle nicht mehr gegeben, kann bereits eine sehr geringe Menge an austretendem Schmiermittel die zusätzliche Dichtung überwinden und beispielsweise auf ein Lebensmittelprodukt tropfen. Das Lebensmittelprodukt wird dann unbrauchbar. Dabei ist besonders das Austreten von geringen Mengen von Schmiermittel gefährlich, da geringe Mengen gegebenenfalls unbemerkt bleiben können und es dann zur Auslieferung der verunreinigten Lebensmittelprodukte kommen kann.

Aus der JP 2009-255194 A und der JP 2013 111694 A sind jeweils ein Manipulator gemäß dem Oberbegriff des Anspruchs 1 bekannt.

Es ist die der Erfindung zugrundeliegende Aufgabe, einen Manipulator oder Roboter anzugeben, welcher insbesondere für Hygieneumgebungen geeignet ist und einen erhöhten Schutz gegen die Verunreinigung von Produkten durch austretendes Schmiermittel bietet.

Diese Aufgabe wird erfindungsgemäß durch einen Manipulator gemäß Anspruch 1 und insbesondere dadurch gelöst, dass an dem Getriebegehäuse eine Schutzvorrichtung angebracht ist, die ein Reservoir enthält, welches zur dauerhaften Aufnahme von aus dem Getriebe austretendem Schmiermittel ausgebildet ist, wobei das Reservoir zur Aufnahme von zumindest 100% des vorbestimmten Volumens des Schmiermittels eingerichtet ist.

Die Erfindung geht von der Erkenntnis aus, dass durch die dauerhafte Aufnahme von aus dem Getriebe austretendem Schmiermittel in dem Reservoir beispielsweise eine sich abnutzende Dichtung entfallen kann und trotzdem ein dauerhafter Schutz gegen austretendes Schmiermittel bereitgestellt werden kann. Erfindungsgemäß kann somit auf zusätzliche Dichtungen verzichtet werden, die an sich bewegenden Teilen anliegen und damit einer starken Abnutzung unterliegen.

Zudem kann erfindungsgemäß aufgrund der Größe des Reservoirs die Gesamtheit des Schmiermittels des Getriebes dauerhaft aufgenommen werden. Auf diese Weise ist es möglich, dass sowohl kleinere als auch größere Lecks in dem Getriebegehäuse die Produktion von Lebensmitteln und dergleichen nicht unbemerkt verschmutzen. In der Folge kann es also vermieden werden, dass große Teile einer Produktion durch Schmiermittel unbrauchbar werden.

Aufgrund der Größe des Reservoirs kann zudem sichergestellt werden, dass austretendes Schmiermittel auch bei längeren Überprüfungsintervallen und damit bei größeren austretenden Mengen von Schmiermittel dauerhaft gehalten werden kann. Der erfindungsgemäße Manipulator eignet sich daher nicht nur für Hygieneumgebungen sondern kann z.B. auch in Reinräumen eingesetzt werden. Hierbei ist zusätzlich von Vorteil, dass die Schutzvorrichtung nicht nur Schmiermittel, sondern auch z.B. Abrieb des Getriebes zurückhalten kann.

Nachfolgend werden weitere Aspekte des erfindungsgemäßen Manipulators näher erläutert.

Bei dem Manipulator kann es sich beispielsweise um einen Roboter mit zumindest drei Achsen handeln. Bevorzugt ist der Manipulator ein Delta-Roboter mit insbesondere drei gestellfest montierten Rotationsachsen und einer Arbeitsplattform, die räumlich parallelogrammgeführt ist. Der Delta-Roboter kann drei Motoren mit je einem Getriebe und je einer Schutzvorrichtung umfassen. Der Delta-Roboter kann weiterhin ein Gehäuse umfassen, welches ortsfest montiert ist. In dem Gehäuse können die Motoren unbeweglich, d.h. lageunveränderlich, angeordnet sein. Die Motoren können mittels eines Getriebes jeweils einen Oberarm antreiben. Durch Bewegungen der Oberarme kann eine Parallelplatte bewegt werden, wobei die Parallelplatte bevorzugt mittels Kugelgelenken mit drei Unterarmen gekoppelt ist. Die Unterarme können jeweils über weitere Kugelgelenke mit dem jeweiligen Oberarm gekoppelt sein. Mit jedem Motor kann, wie erwähnt, ein Getriebe in Wirkverbindung gekoppelt sein, wobei an jedem Getriebegehäuse der Getriebe bevorzugt eine separate Schutzvorrichtung angebracht ist.

Bei dem Roboter kann es sich generell um eine Parallelkinematik handeln. Die Manipulatormechanik kann einen Roboterarm und/oder einen Greifer umfassen. Alternativ kann der Manipulator auch ein SCARA-Roboter sein (*Selective Compliance Assembly Robot Arm*), d.h. es kann sich um einen horizontalen Gelenkarmroboter handeln.

Alternativ kann der Manipulator aber auch beispielsweise eine Presse, eine Werkzeugmaschine, ein Förderband und dergleichen sein. In einem solchen Fall kann die Manipulatormechanik insbesondere eine Pumpe, eine Säge, ein Fräser oder ein Rollenantrieb umfassen.

Insbesondere kann der Manipulator mehrere Motoren mit jeweils einem an dem Motor angeschlossenen Getriebe umfassen. Für jedes Getriebe kann an dem jeweiligen Getriebegehäuse eine separate Schutzvorrichtung angebracht sein.

Beispielsweise handelt es sich bei dem Getriebe um ein Planetengetriebe. Die Zahnräder des Getriebes können in dem Getriebegehäuse angeordnet sein, wobei die Zahnräder von dem Schmiermittel geschmiert werden. Das Schmiermittel ist in dem Getriebegehäuse vorhanden, wobei ein vorbestimmtes Volumen des Schmiermittels in das Getriebegehäuse eingefüllt wird. Das Getriebe kann eine Tauchschmierung verwenden. Als Schmiermittel kann z.B. ein Schmieröl oder ein Schmierfett zum Einsatz kommen.

Das Getriebegehäuse kann zwischen einem Antrieb und einem Abtrieb des Getriebes angeordnet sein und üblicherweise einen Austritt des Schmiermittels aus dem Getriebegehäuse verhindern. Lediglich im Fehlerfall kann das Schmiermittel aus dem Getriebegehäuse austreten, beispielsweise wenn eine um den Abtrieb angeordnete Dichtung defekt wird. Bei dem Abtrieb kann es sich z.B. um einen rotierenden Flansch oder um eine Abtriebswelle handeln. Alternativ kann der Abtrieb beispielsweise auch eine Schubstange und dergleichen sein.

Bevorzugt erstreckt sich der Abtrieb durch die Schutzvorrichtung hindurch. Vorteilhafte Weiterbildungen der Erfindung sind der Beschreibung, den Zeichnungen sowie den Unteransprüchen zu entnehmen.

Erfindungsgemäß ist das Reservoir zur Aufnahme von zumindest 100% des Schmiermittels ausgebildet. Insbesondere beträgt das nutzbare Volumen des Reservoirs zumindest 100% des vorbestimmten Volumens des Schmiermittels, wobei das Volumen des Reservoirs größer sein kann als das nutzbare Volumen des Reservoirs. Weiter bevorzugt kann das Reservoir auch zur Aufnahme von mehr als 100% des Volumens des Schmiermittels ausgebildet sein. Dementsprechend kann ein nutzbares Volumen des Reservoirs mehr als 100% des vorbestimmten Volumens des Schmiermittels betragen.

Dadurch, dass das Reservoir zur Aufnahme von z.B. zumindest 100% des Volumens ausgebildet ist, kann auch ein vollständiges Auslaufen des Schmiermittels aus dem Getriebegehäuse nicht zur Verschmutzung von Produkten führen. Die Betriebssicherheit und insbesondere die Sicherheit in Bezug auf die Erfüllung von Hygienevorschriften können durch die Schutzvorrichtung somit weiter erhöht werden.

Insbesondere ist das Reservoir so ausgebildet, dass Bevorzugt maximal 150% und besonders bevorzugt maximal 200% des vorbestimmten Volumens des Schmiermittels von dem Reservoir aufgenommen werden können.

Das maximale nutzbare Volumen des Reservoirs kann bevorzugt also maximal 150% oder 200% des vorbestimmten Volumens des Schmiermittels betragen. Durch die Begrenzung des Volumens kann die Größe der Schutzvorrichtung begrenzt werden, wodurch der Platzbedarf für die Schutzvorrichtung gering gehalten wird. Auf diese Weise kann ein Nachrüsten der Schutzvorrichtung bei bestehenden Manipulatoren ermöglicht werden.

Gemäß einer weiteren vorteilhaften Ausführungsform sind das Getriebe und/oder die Schutzvorrichtung ortsfest angeordnet und das Reservoir ist derart ausgebildet, dass sich austretendes Schmiermittel durch die Gewichtskraft des Schmiermittels in dem Reservoir sammelt. Insbesondere sammelt sich aus dem Getriebegehäuse austretendes Schmiermittel allein durch die Gewichtskraft des Schmiermittels in dem Reservoir. Zudem kann das Schmiermittel auch allein aufgrund der Gewichtskraft in dem Reservoir dauerhaft verbleiben. Insofern ist für den dauerhaften Verbleib des Schmiermittels im Reservoir keine Dichtung und insbesondere keine Dichtung an bewegten Teilen notwendig.

Die Verwendung der Gewichtskraft um das Schmiermittel dem Reservoir zuzuführen ist insbesondere bei Parallelkinematiken und damit bei Delta-Robotern möglich. Bei Delta-Robotern bewegen sich das Getriebe und der Motor nicht, d.h. sie sind lageunveränderlich. Dementsprechend kann das Reservoir zumindest zum Teil so unterhalb des Getriebes und/oder des Abtriebs angeordnet werden, dass sich das Schmiermittel "automatisch" in dem Reservoir sammelt.

Gemäß einer weiteren vorteilhaften Ausführungsform ist die Schutzvorrichtung derart ausgebildet, dass trotz einer Lageveränderung der Schutzvorrichtung und/oder des Getriebes von bis zu 45° oder bis zu 60°, austretendes Schmiermittel sich durch die Gewichtskraft des Schmiermittels in dem Reservoir sammelt. Hierzu kann beispielsweise eine Begrenzung des Reservoirs eine hochgezogene Wand bilden, so dass eine Lageveränderung von bis zu 45° oder bis zu 60° nicht zum Auslaufen des Schmiermittels aus dem Reservoir führt. Zudem kann die Position und/oder die Größe des Reservoirs auch so gewählt sein, dass auch nach der Lageveränderung von bis zu 45° (oder bis zu 60°) das Reservoir zumindest noch teilweise in einer Position ist, in dem austretendes Schmiermittel noch von dem Reservoir aufgefangen werden kann.

Alternativ kann das Reservoir auch so ausgebildet sein, dass Lageveränderungen bis maximal 30°, bis maximal 15° oder bis maximal 5° möglich sind und sich das austretende Schmiermittel trotzdem noch durch die Gewichtskraft des Schmiermittels in dem Reservoir sammelt und in dem Reservoir verbleibt.

Bei der genannten Lageveränderung kann es sich beispielsweise um eine Lageveränderung handeln, die eine von dem Abtrieb definierte Achse um z.B. bis zu 45° verschwenkt. Eine Drehung des Getriebes und der Schutzvorrichtung um die Achse wird insbesondere nicht als Lageveränderung angesehen.

Gemäß einer weiteren vorteilhaften Ausführungsform ist die Schutzvorrichtung umlaufend um den Abtrieb des Getriebes herum angeordnet, wobei das Reservoir auch insbesondere umlaufend um den Abtrieb des Getriebes herum angeordnet ist. Im Bereich des Abtriebs ist das Risiko besonders hoch, dass unerwünscht Schmiermittel aus dem Getriebegehäuse austritt. Insofern kann die dort angeordnete Schutzvorrichtung austretendes Schmiermittel abfangen und dem Reservoir zuführen. Das Reservoir kann rotationssymmetrisch ausgebildet sein, wobei als Rotationsachse bevorzugt die von dem Abtrieb definierte Achse dient. Insbesondere kann das Reservoir auch nur bereichsweise umlaufend sein, beispielsweise in einem Winkelbereich von bis zu 270°, 180°, 90°, 45°, 30° oder 15°.

Bei der Verwendung einer vollständig umlaufenden Schutzvorrichtung und eines vollständig umlaufenden Reservoirs muss beim Einbau der Schutzvorrichtung vorteilhafterweise keine besondere Einbaulage berücksichtigt werden.

Eine umlaufende Schutzvorrichtung kann das Getriebegehäuses zumindest bereichsweise nach außen abschirmen, wodurch auch Einwirkungen von außen, z.B. durch Druckwasser, von dem Getriebegehäuse abgehalten werden. Dadurch kann ein zusätzlicher Schutz des Getriebes, z.B. bei der Reinigung des Manipulators mittels Druckwasser, erzielt werden.

Insbesondere bildet die Schutzvorrichtung einen zumindest im Wesentlichen geschlossenen Innenraum. Hierdurch wird auch ein Abfangen von Schmiermittel ermöglicht, welches unter Druck aus dem Getriebegehäuse austritt und sonst z.B. auf die Lebensmittelprodukte spritzen würde.

Die Schutzvorrichtung kann den Innenraum auch zusammen mit dem Getriebegehäuse bilden. Genauer gesagt, kann die Schutzvorrichtung in einem stirnseitigen Endbereich des Getriebegehäuses an dem Getriebegehäuse angebracht sein. Eine Stirnseite und/oder eine Seitenwand des Getriebegehäuses können den Innenraum der Schutzvorrichtung und insbesondere auch das Reservoir begrenzen. Bevorzugt ist die Schutzvorrichtung dichtend an dem Getriebegehäuse angebracht. Hierzu kann zwischen der Seitenwand des Getriebegehäuses und der Schutzvorrichtung ein um das Getriebegehäuse umlaufender Dichtring vorgesehen sein. Zudem kann die Stirnseite des Getriebegehäuses eine funktionale Getriebedichtung umfassen.

Der stirnseitige Endbereich des Getriebegehäuses liegt einem Endbereich des Getriebegehäuses gegenüber, an dem der Motor an dem Getriebegehäuse befestigt ist.

Die Schutzvorrichtung kann eine im Wesentlichen rotationssymmetrische äußere Form aufweisen und/oder symmetrisch um die Achse des Abtriebs herum angeordnet sein. Die Schutzvorrichtung ist bevorzugt zylinderförmig ausgebildet.

Weiter bevorzugt ist die Schutzvorrichtung ausschließlich in dem stirnseitigen Endbereich mit dem Getriebegehäuse gekoppelt. Zudem kann die Schutzvorrichtung ausschließlich im Bereich um den Abtrieb herum angeordnet sein. Die Größe der Schutzvorrichtung kann auf diese Weise begrenzt werden, sodass die Schutzvorrichtung auch in beengten Bauräumen eingesetzt werden kann.

Besonders bevorzugt ist das Reservoir durch einen umlaufenden Rücksprung gebildet. Der Rücksprung kann in einem Gehäuse der Schutzvorrichtung vorgesehen sein. Das Reservoir umfasst bevorzugt den Rücksprung, d.h. neben dem Rücksprung kann das Reservoir auch noch weitere verbundene Hohlräume umfassen. Der Rücksprung und damit die Schutzvorrichtung können derart ausgebildet sein, dass, in Richtung des Abtriebs gesehen, die Schutzvorrichtung zumindest bereichsweise über das Getriebegehäuse hinausragt. Der Rücksprung kann eine ringförmige Vertiefung umfassen, welche bevorzugt in eine Seitenwand und/oder eine Stirnwand der Schutzvorrichtung eingebracht ist.

Gemäß einer weiteren vorteilhaften Ausführungsform schließt das Reservoir direkt an das Getriebegehäuse an. Hierzu kann die Schutzvorrichtung direkt mit dem Getriebegehäuse gekoppelt, beispielsweise verschraubt, sein. Das Getriebegehäuse selbst kann auch eine Begrenzung für das Reservoir bilden.

Gemäß einer weiteren vorteilhaften Ausführungsform umfasst die Schutzvorrichtung ein Ablenkmittel, welches an dem Abtrieb des Getriebes angebracht ist und eingerichtet ist, austretendes Schmiermittel in das Reservoir zu leiten. Das Ablenkmittel kann beispielsweise einen Kragen und/oder einen Schirm umfassen. Das Ablenkmittel kann sich beispielsweise mit dem Abtrieb mitdrehen oder mitbewegen und z.B. drehfest an dem Abtrieb angebracht sein. Durch das Ablenkmittel kann entlang des Abtriebs austretendes Schmiermittel von dem Abtrieb weggelenkt und dem Reservoir zugeführt werden. Insbesondere kann entlang des Abtriebs herabfließendes Schmiermittel von dem Ablenkmittel radial nach außen gelenkt werden und am Ende des Ablenkmittels durch seine Gewichtskraft in das Reservoir tropfen. Hierzu kann das Ablenkmittel an einem dem Reservoir zugewandten Ende eine Tropfkante umfassen.

Zudem können in dem Ablenkmittel Kanäle und/oder Rohrleitungen vorhanden sein, die, in ihrem Querschnitt gesehen, geschlossen sind. Durch die Kanäle oder die Rohrleitungen kann ein Abschleudern des Schmiermittels durch einen sich drehenden Abtrieb verhindert werden.

Aufgrund der Verwendung des Ablenkmittels kann die Schutzvorrichtung und das Getriebe auch "Überkopf' eingebaut werden. Dies bedeutet, dass das Getriebe oberhalb der Schutzvorrichtung angeordnet ist. Die möglichen Einsatzbereiche der Schutzvorrichtung können durch das Ablenkmittel folglich erweitert werden.

Gemäß einer weiteren vorteilhaften Ausführungsform umfasst der Manipulator einen Sensor zur Erkennung von Schmiermittel in dem Reservoir. Der Sensor kann direkt in dem Reservoir angeordnet sein und ein elektrisches Signal ausgeben, welches die Anwesenheit von Schmiermittel anzeigt.

Alternativ kann es sich bei dem Sensor auch um einen optischen Sensor handeln, der in das Reservoir blickt und ebenfalls die Anwesenheit von Schmiermittel in dem Reservoir anzeigt. Wird Schmiermittel in dem Reservoir erkannt, so kann eine Steuereinheit des Manipulators eine Fehlermeldung ausgeben, einen Notlaufbetrieb aktivieren und/oder eine Abschaltung des Manipulators bzw. des jeweiligen Motors bewirken.

Alternativ oder zusätzlich zu der Auswertung des Sensors kann die Steuereinheit auch den Stromverbrauch und/oder die Leistungsaufnahme des Motors messen. Ein erhöhter Stromverbrauch oder eine erhöhte Leistungsaufnahme können dann auf einen Verlust von Schmiermittel hindeuten.

Gemäß einer weiteren vorteilhaften Ausführungsform ist in dem Reservoir ein Bindemittel vorgesehen, welches das Schmiermittel zumindest teilweise bindet. Durch das Bindemittel kann das Schmiermittel fester bzw. weniger flüssig werden, wodurch ein Auslaufen des Schmiermittels aus dem Reservoir verhindert werden kann. Insbesondere kann das Schmiermittel chemisch mit dem Bindemittel reagieren, um beispielsweise ein Gel oder einen Feststoff zu bilden.

Gemäß einer weiteren vorteilhaften Ausführungsform umfasst das Reservoir Kapillaren, welche das Schmiermittel aufnehmen. Durch die Kapillarwirkung kann das Schmiermittel aufgesaugt werden, wodurch das Schmiermittel dauerhaft in den Kapillaren gehalten werden kann. Hierdurch ist es möglich, dass das Schmiermittel auch bei einer Demontage des Manipulators und einem damit einhergehenden starken Verschwenken der Schutzvorrichtung in dem Reservoir bleibt. Ein ungewolltes Austreten des Schmiermittels wird hierdurch auch bei einer Demontage oder bei Wartungsarbeiten verhindert.

Gemäß einer weiteren vorteilhaften Ausführungsform ist der Motor vollständig gekapselt und/oder ist ein Elektromotor. Der Motor kann beispielsweise druckwasserdicht sein. Durch die Kapselung des Motors kann es zudem verhindert werden, dass z.B. Abrieb des Motors nach außen und damit auf die Produkte gelangt. Anstelle der Ausbildung als Elektromotor kann es sich bei dem Motor auch um einen hydraulisch oder mit Druckluft angetriebenen Motor handeln.

Gemäß einer weiteren vorteilhaften Ausführungsform umfasst die Schutzvorrichtung ein Lager für den Abtrieb, wobei der Abtrieb durch das Lager hindurch aus der Schutzvorrichtung austritt. Das Lager kann einen Endbereich der Schutzvorrichtung bilden. Handelt es sich bei dem Abtrieb beispielsweise um eine Abtriebswelle, so kann das Lager ein gedichtetes Kugellager sein. Ist der Abtrieb z.B. eine Schubstange, kann das Lager ein Gleitlager sein. Das Lager kann als Spritzwasser- oder Druckwasserschutz dienen und so einen gewissen Schutz vor dem Eindringen von Flüssigkeiten in die Schutzvorrichtung bieten. Vorteilhafterweise kann das Getriebe und die Schutzvorrichtung dann von außen z.B. mittels Druckwasser gereinigt werden.

Bevorzugt ist zwischen dem Lager und dem Abtrieb keine Dichtung vorhanden. Eine Dichtung ist aufgrund des Reservoirs auch nicht notwendig, da das Reservoir das Schmiermittel dauerhaft zurückhält.

Insbesondere kann der Abtrieb des Getriebes innerhalb der Schutzvorrichtung enden, wobei die Schutzvorrichtung eine Verlängerung des Abtriebs umfassen kann. Der Abtrieb kann den Abtrieb des Getriebes und die Verlängerung des Abtriebs umfassen. Die Verlängerung kann auf den Abtrieb drehfest aufgeflanscht und/oder aufgeschraubt sein.

Gemäß einer weiteren vorteilhaften Ausführungsform weisen die Schutzvorrichtung und das Getriebe in einem von dem Motor abgewandten Endbereich zumindest im Wesentlichen die gleiche äußere Kontur auf. Auch gegebenenfalls vorhandene Gewinde oder Bohrungen können bei dem Getriebe und der Schutzvorrichtung an der entsprechenden Stelle angebracht sein. Dies bedeutet, die Schutzvorrichtung und das Getriebe können kompatibel hinsichtlich des Anschlusses nachfolgender Komponenten sein. Hierdurch wird es vereinfacht, die Schutzvorrichtung auch bei bestehenden Systemen nachzurüsten, da die Schnittstelle zu weiteren Komponenten zumindest im Wesentlichen identisch ist. Beispielsweise kann die äußere Kontur zylinderförmig sein und/oder sich zu ihrem Ende hin verjüngen. Eine Einheit aus Schutzvorrichtung und Getriebe kann durch die Schutzvorrichtung in ihrer Länge (d.h. in der Richtung des Abtriebs) geringfügig länger ausfallen als ein Getriebe für sich genommen.

Beispielsweise kann das Getriebe derart ausgebildet sein, dass in dem Getriebegehäuse ein Volumen von etwa 30 ml Schmiermittel vorhanden ist. Dementsprechend kann das Reservoir zur Aufnahme von zumindest 30 ml ml Schmiermittel ausgebildet sein. Die Größe der Schutzvorrichtung kann derart gewählt sein, dass die Schutzvorrichtung in der Erstreckungsrichtung des Abtriebs eine Länge von etwa 5 cm aufweist. Die Schutzvorrichtung kann eine Einheit aus Motor und Getriebe somit um etwa 5 cm verlängern.

Nachfolgend wird die Erfindung rein beispielhaft unter Bezugnahme auf die Zeichnungen beschrieben. Es zeigen:
- Fig. 1: einen Delta-Roboter in perspektivischer Ansicht;
- Fig. 2: eine erste Ausführungsform einer an einem Getriebegehäuse befestigten Schutzvorrichtung in einer schematischen Schnittansicht;
- Fig. 3: eine zweite Ausführungsform einer an einem Getriebegehäuse befestigten Schutzvorrichtung in einer schematischen Schnittansicht;
- Fig. 4: eine dritte Ausführungsform einer an einem Getriebegehäuse befestigten Schutzvorrichtung in einer schematischen Schnittansicht; und
- Fig. 5: eine vierte Ausführungsform einer an einem Getriebegehäuse befestigten Schutzvorrichtung in einer schematischen Schnittansicht.

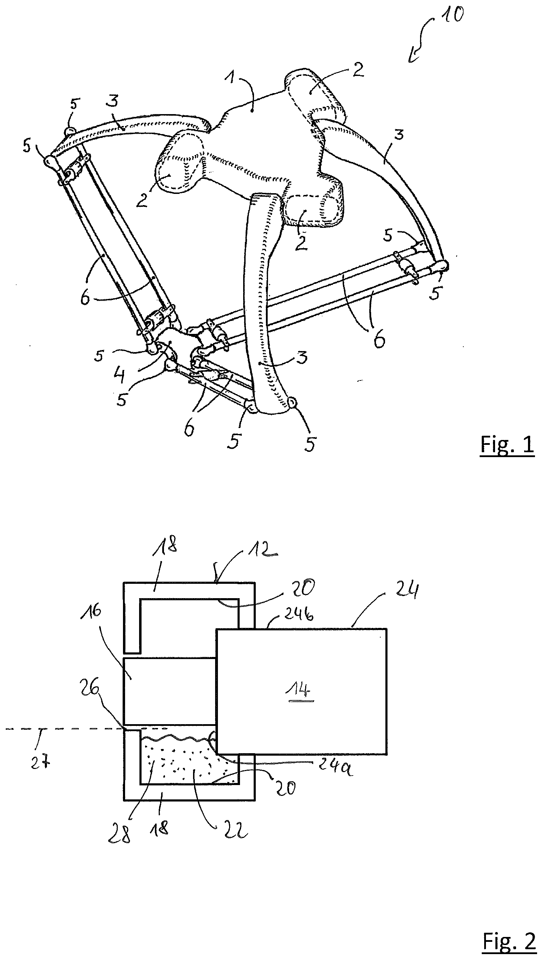

Fig. 1 zeigt einen Manipulator in Form eines Delta-Roboters 10. Mit dem Delta-Roboter 10 können automatisierte Vorgänge bei der Herstellung von Lebensmittelprodukten durchgeführt werden.

Der Delta-Roboter 10 umfasst ein Gehäuse 1, welches ortsfest montiert ist. In dem Gehäuse 1 sind drei Servoantriebe 2 unbeweglich in dem Gehäuse 1 angeordnet, die jeweils einen Oberarm 3 antreiben. Durch Bewegungen der Oberarme 3 kann eine Parallelplatte 4 bewegt werden, wobei die Parallelplatte 4 mittels Kugelgelenken 5 mit drei Unterarmen 6 gekoppelt ist. Die Unterarme 6 sind jeweils über weitere Kugelgelenke 5 mit dem jeweiligen Oberarm 3 gekoppelt.

Aufgrund des ortsfesten Gehäuses 1 sind auch die Servoantriebe 2 ortsfest und behalten ihre jeweilige Position bei.

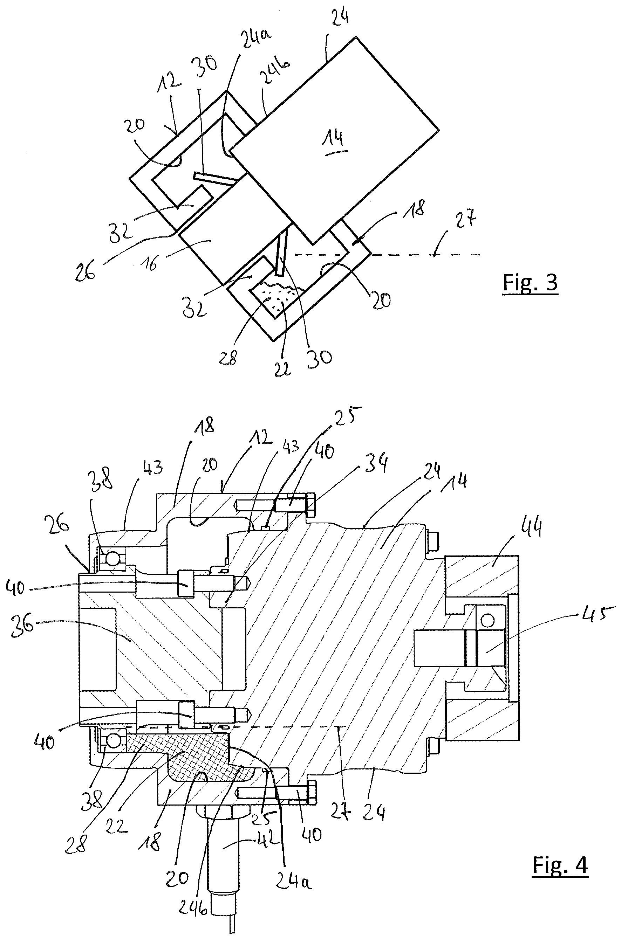

Jeder Servoantrieb 2 umfasst einen Elektromotor 44 (Fig. 4) sowie ein Getriebe und eine Schutzvorrichtung.

Eine erste Ausführungsform einer Schutzvorrichtung 12, welche an einem Getriebe 14 angebracht ist, ist in Fig. 2 in einer Querschnittsansicht dargestellt. Die Schutzvorrichtung 12 dient dazu, unerwünscht aus dem Getriebe 14 austretendes Schmiermittel 28, beispielsweise Schmieröl, aufzufangen und auf diese Weise von den Lebensmittelprodukten fernzuhalten.

Die Schutzvorrichtung 12 und das Getriebe 14 sind in Fig. 2 in einer tatsächlichen Einbaulage dargestellt, d.h. die Schutzvorrichtung 12 und das Getriebe 14 sind in horizontaler Richtung hintereinander angeordnet. Auch die weiteren Figuren (Fig. 3 bis Fig. 5) zeigen die Schutzvorrichtung 12 und das Getriebe 14 jeweils in einer tatsächlich möglichen Einbaulage.

Die Schutzvorrichtung 12 gemäß Fig. 2 ist umlaufend um eine Abtriebswelle 16 des Getriebes 14 angeordnet, wobei die Schutzvorrichtung 12 ein Gehäuse 18 umfasst, welches die Abtriebswelle 16 umgibt. Die Abtriebswelle 16 erstreckt sich in der Horizontalen, d.h. waagerecht. In das Gehäuse 18 ist ein umlaufender Rücksprung 20 eingebracht, welcher ein Reservoir 22 definiert. Das Gehäuse 18 der Schutzvorrichtung 12 ist direkt an das Getriebe 14 bzw. an eine Seitenwand 24b des Getriebegehäuses 24 angebracht. Das Getriebegehäuse 24 begrenzt das Reservoir 22 bereichsweise mit einer Stirnwand 24a und der Seitenwand 24b. Die Abtriebswelle 16 des Getriebes 14 erstreckt sich durch die Schutzvorrichtung 12 hindurch und tritt im Bereich einer Austrittsöffnung 26 aus dem Gehäuse 18 aus. Die Abtriebswelle 16 kann auch länger ausgebildet sein als in der Fig. 2 dargestellt.

Tritt nun unerwünscht Schmiermittel 28 aus dem Getriebegehäuse 24 aus, beispielsweise im Bereich der Abtriebswelle 16, so fließt das Schmiermittel 28 durch seine Gewichtskraft an der Abtriebswelle 16, dem Gehäuse 18 und dem Getriebegehäuse 24 "nach unten" und gelangt somit in das Reservoir 22. Die Größe des Reservoirs 22 ist derart ausgelegt, dass sämtliches Schmiermittel 28, welches zunächst in dem Getriebegehäuse 24 vorhanden war, von dem Reservoir 22 aufgenommen werden kann. Ein solcher Fall ist in Fig. 2 dargestellt. Es ist zu erkennen, dass das Schmiermittel 28 nicht durch die Austrittsöffnung 26 das Gehäuse 18 bzw. das Reservoir 22 verlassen kann. Das Niveau des Schmiermittels 28 erreicht damit nicht eine Überlauflinie 27, die in den Figuren anzeigt, wann zu viel Schmiermittel 28 in dem Reservoir 22 vorhanden ist. In dem in Fig. 2 gezeigten Fall wird das Schmiermittel 28 dauerhaft in dem Reservoir 22 gehalten, wodurch Verunreinigungen von Lebensmittelprodukten verhindert werden können.

Ein Überlaufen kann insbesondere dann verhindert werden, wenn sich die Lage des Getriebes 14 und damit auch die Lage der Schutzvorrichtung 12 nicht oder um z.B. maximal 15° ändert.

In Fig. 3 ist eine zweite Ausführungsform gezeigt, die sich von der ersten Ausführungsform von Fig. 2 dadurch unterscheidet, dass an der Abtriebswelle 16 ein umlaufender Kragen 30 angebracht ist. Ein Abstand des Kragens 30 von der Abtriebswelle 16 nimmt mit steigendem Abstand von dem Getriebe 14 zu.

Durch den Kragen 30 wird es ermöglicht, das Getriebe 14 auch schräg zur Horizontalen (d.h. in der in Fig. 3 gezeigten Position oder Überkopf) zu montieren. Bei einer Überkopfmontage befindet sich das Getriebe 14 oberhalb der Schutzvorrichtung 12. Durch den Kragen 30 wird auslaufendes Schmiermittel 28 von der Abtriebswelle 16 weggeleitet und in Richtung des Reservoirs 22 abgelenkt. Um das Schmiermittel 28 dauerhaft in dem Reservoir 22 zu halten, wird das Reservoir neben dem Rücksprung 20 von einer Einbuchtung 32 begrenzt. Die Einbuchtung 32 ist Teil des Gehäuses 18 und erstreckt sich parallel zu der Abtriebswelle 16 zu dem Getriebe 14 hin. Durch das Ende der Einbuchtung 32 wird die Position der Überlauflinie 27 definiert.

Fig. 4 zeigt eine dritte Ausführungsform einer Schutzvorrichtung 12. Die dritte Ausführungsform ist zum waagrechten Einbau vorgesehen. Im Vergleich zu der ersten Ausführungsform von Fig. 2 umfasst das Getriebe 14 gemäß Fig. 4 einen Abtriebsflansch 34, an welchem eine Abtriebsverlängerung 36 mit Schrauben 40 angeschraubt ist. Die Abtriebsverlängerung 36 wird von einem gedichteten Kugellager 38 gehalten und gelagert. Das Gehäuse 18 der Schutzvorrichtung 12 ist mittels weiterer Schrauben 40 mit dem Getriebegehäuse 24 verschraubt. Das Reservoir 22 wird wiederum durch den umlaufenden Rücksprung 20 gebildet. Zusätzlich wird das Reservoir 22 durch das Kugellager 38 begrenzt. Die Größe des Kugellagers 38 (d.h. die Höhe des Kugellagers 38 in einer Richtung senkrecht zur Erstreckungsrichtung der Abtriebsverlängerung 36) begrenzt das Reservoir 22 nach oben hin und definiert auf diese Weise die Position der Überlauflinie 27.

Im Bereich des Getriebes 14 ist das Reservoir 22 durch eine Stirnwand 24a und eine Seitenwand 24b des Getriebegehäuses 24 begrenzt. Die Stirnwand 24a kann durch eine funktionale Dichtung des Getriebes 14 gebildet sein. Zwischen der Seitenwand 24b und dem Gehäuse 18 der Schutzvorrichtung 12 ist zudem ein um das Getriebegehäuse 24 umlaufender Dichtring 25 angebracht.

In dem Reservoir 22 ist ein elektrischer Sensor (nicht gezeigt) angeordnet, der die Anwesenheit von Schmiermittel 28 in dem Reservoir 22 anzeigt. Der Sensor ist mittels eines elektrischen Anschlusses 42 auslesbar.

Eine Außenkontur 43 der Schutzvorrichtung 12 und des Getriebes 14 sind an einem stirnseitigen Ende jeweils identisch. Das stirnseitige Ende ist einem Servomotor 44 abgewandt. Der Servomotor 44 steht in Wirkverbindung mit dem Getriebe 14. Hierzu ist eine Antriebswelle 45 des Servomotors 44 mit dem Getriebe 14 gekoppelt.

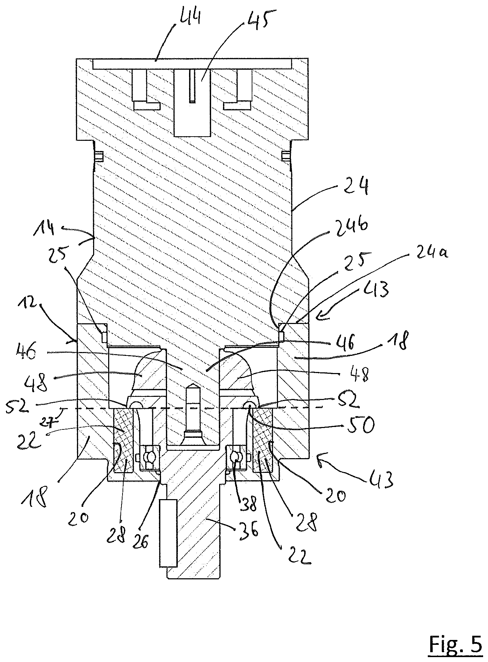

Die in Fig. 5 gezeigte vierte Ausführungsform der Schutzvorrichtung 12 umfasst eine Abtriebsverlängerung 36, die als Abtriebswelle ausgebildet ist. Diese Abtriebsverlängerung 36 ist auf eine Abtriebswelle 46 des Getriebes 14 aufgeschraubt.

Die gezeigte vierte Ausführungsform ist für den Überkopfeinbau ausgebildet. Hierzu umfasst die Abtriebsverlängerung 36 eine glockenförmige Auswölbung 48, die sich mit zunehmendem Abstand von dem Getriebe 14 weiter von der Abtriebswelle 46 bzw. einer von der Abtriebswelle 46 definierten Achse weg erstreckt.

Im Unterschied zu der dritten Ausführungsform von Fig. 4 ist gemäß Fig. 5 der Rücksprung 20 in einem stirnseitigen Ende des Gehäuses 18 vorgesehen. Der Rücksprung 20 definiert das Reservoir 22. Das Reservoir 22 umgibt das Kugellager 38. Das obere Ende des Rücksprungs 20 legt dabei die Überlauflinie 27 fest.

In Fig. 5 ist das Reservoir 22 vollständig mit Schmiermittel 28 gefüllt. Oberhalb des Reservoirs 22 endet die glockenförmige Auswölbung 48, wobei in einem stirnseitigen Ende der Auswölbung 48 eine umlaufende halbkreisförmige Ausnehmung 50 vorgesehen ist, die eine Tropfkante 52 bildet.

Tritt unerwünscht Schmiermittel 28 aus dem Getriebe 14 aus, so rinnt das Schmiermittel 28 auf der Oberfläche der Auswölbung 48 in Richtung des Reservoirs 22 und tropft schließlich von der Tropfkante 52 in das Reservoir 22.

Das Reservoir 22 hält das Schmiermittel 28 dauerhaft in der Schutzvorrichtung 12, so dass eine Verschmutzung z.B. der Lebensmittelprodukte verhindert werden kann.

### Bezugszeichenliste

- 1: Gehäuse
- 2: Servoantrieb
- 3: Oberarm
- 4: Parallelplatte
- 5: Kugelgelenk
- 6: Unterarm
- 10: Delta-Roboter
- 12: Schutzvorrichtung
- 14: Getriebe
- 16: Abtriebswelle
- 18: Gehäuse
- 20: Rücksprung
- 22: Reservoir
- 24: Getriebegehäuse
- 24a: Stirnwand
- 24b: Seitenwand
- 25: Dichtring
- 26: Austrittsöffnung
- 27: Überlauflinie
- 28: Schmiermittel
- 30: Kragen
- 32: Einbuchtung
- 34: Abtriebsflansch
- 36: Abtriebsverlängerung
- 38: Kugellager
- 40: Schraube
- 42: elektrischer Anschluss
- 43: Außenkontur
- 44: Servomotor
- 45: Antriebswelle
- 46: Abtriebswelle
- 48: Auswölbung
- 50: Ausnehmung
- 52: Tropfkante

## Patentansprüche

1. Manipulator (10), insbesondere Roboter, bevorzugt Delta-Roboter, bevorzugt für Hygieneumgebungen, mit
einer Manipulatormechanik (3, 4, 6), insbesondere einem Roboterarm, einem Motor (44),
einem Getriebe (14) mit einem Getriebegehäuse (24), wobei in dem Getriebegehäuse (24) ein vorbestimmtes Volumen eines Schmiermittels (28) vorhanden ist,
wobei
das Getriebe (14) mit dem Motor (44) in Wirkverbindung steht und das Getriebe (14) ausgebildet ist, die Manipulatormechanik (3, 4, 6) mittels eines Abtriebs (16, 34, 36, 46) anzutreiben,
wobei
an dem Getriebegehäuse (24) eine Schutzvorrichtung (12) angebracht ist, die ein Reservoir (22) enthält, welches zur dauerhaften Aufnahme von aus dem Getriebe (14) austretenden Schmiermittel (28) ausgebildet ist, **dadurch gekennzeichnet, dass** das Reservoir (22) zur dauerhaften Aufnahme von zumindest 100% des vorbestimmten Volumens des Schmiermittels (28) eingerichtet ist.

2. Manipulator (10) nach Anspruch 1,
**dadurch gekennzeichnet, dass**
das Getriebe (14) und/oder die Schutzvorrichtung (12) ortsfest angeordnet sind und das Reservoir (22) derart ausgebildet ist, dass sich austretendes Schmiermittel (28) allein durch die Gewichtskraft des Schmiermittels (28) in dem Reservoir (22) sammelt.

3. Manipulator (10) nach zumindest einem der vorstehenden Ansprüche,
**dadurch gekennzeichnet, dass**
die Schutzvorrichtung (12) derart ausgebildet ist, dass trotz einer Lageveränderung der Schutzvorrichtung (12) und/oder des Getriebes (14) von bis zu 45°, austretendes Schmiermittel (28) sich durch die Gewichtskraft des Schmiermittels (28) in dem Reservoir (22) sammelt.

4. Manipulator (10) nach zumindest einem der vorstehenden Ansprüche,
**dadurch gekennzeichnet, dass**
die Schutzvorrichtung (12) umlaufend um den Abtrieb (16, 34, 36, 46) des Getriebes (14) herum angeordnet ist, wobei das Reservoir (22) insbesondere ebenfalls umlaufend um den Abtrieb (16, 34, 36, 46) des Getriebes (14) herum angeordnet ist.

5. Manipulator (10) nach Anspruch 5,
**dadurch gekennzeichnet, dass**
das Reservoir (22) durch einen umlaufenden Rücksprung gebildet ist.

6. Manipulator (10) nach zumindest einem der vorstehenden Ansprüche,
**dadurch gekennzeichnet, dass**
das Reservoir (22) direkt an das Getriebegehäuse (24) anschließt.

7. Manipulator (10) nach zumindest einem der vorstehenden Ansprüche,
**dadurch gekennzeichnet, dass**
die Schutzvorrichtung (12) ein Ablenkmittel (30, 48) umfasst, welches an dem Abtrieb (16, 34, 36, 46) des Getriebes (14) angebracht ist und eingerichtet ist, austretendes Schmiermittel (28) in das Reservoir (22) zu leiten.

8. Manipulator (10) nach zumindest einem der vorstehenden Ansprüche,
**gekennzeichnet durch**
einen Sensor zur Erkennung von Schmiermittel (28) in dem Reservoir (22).

9. Manipulator (10) nach zumindest einem der vorstehenden Ansprüche,
**dadurch gekennzeichnet, dass**
in dem Reservoir (22) ein Bindemittel vorgesehen ist, welches das Schmiermittel (28) zumindest teilweise bindet.

10. Manipulator (10) nach zumindest einem der vorstehenden Ansprüche,
**dadurch gekennzeichnet, dass**
das Reservoir (22) Kapillaren umfasst, welche das Schmiermittel (28) aufnehmen.

11. Manipulator (10) nach zumindest einem der vorstehenden Ansprüche,
**dadurch gekennzeichnet, dass**
der Motor (44) vollständig gekapselt ist und/oder ein Elektromotor (44) ist.

12. Manipulator (10) nach zumindest einem der vorstehenden Ansprüche,
**dadurch gekennzeichnet, dass**
die Schutzvorrichtung (12) ein Lager (38) für den Abtrieb (16, 34, 36, 46) umfasst, wobei der Abtrieb (16, 34, 36, 46) durch das Lager (38) hindurch aus der Schutzvorrichtung (12) austritt.

13. Manipulator (10) nach zumindest einem der vorstehenden Ansprüche,
**dadurch gekennzeichnet, dass**
die Schutzvorrichtung (12) und das Getriebe (14) in einem von dem Motor (44) abgewandten Endbereich zumindest im Wesentlichen die gleiche äußere Kontur (43) aufweisen.

## Claims

1. A manipulator (10), in particular a robot, preferably a delta robot, preferably for hygienic environments, comprising
a manipulator mechanism (3, 4, 6), in particular a robot arm,
a motor (44), and
a gear (14) having a gear housing (24), wherein a predetermined volume of a lubricant (28) is present in the gear housing (24),
wherein
the gear (14) is in operative connection with the motor (44) and
the gear (14) is configured to drive the manipulator mechanism (3, 4, 6) by means of an output (16, 34, 36, 46),
wherein
a protection device (12) is attached to the gear housing (24) and includes a reservoir (22) which is configured to permanently receive lubricant (28) exiting from the gear (14),
**characterized in that**
the reservoir (22) is configured to permanently receive at least 100% of the predetermined volume of the lubricant (28).

2. A manipulator (10) in accordance with claim 1,
**characterized in that**
the gear (14) and/or the protection device (12) is/are arranged in a fixed position and the reservoir (22) is configured such that exiting lubricant (28) collects in the reservoir (22) solely due to the weight force of the lubricant (28).

3. A manipulator (10) in accordance with at least one of the preceding claims,
**characterized in that**
the protection device (12) is configured such that, despite a change in position of the protection device (12) and/or of the gear (14) of up to 45°, exiting lubricant (28) collects in the reservoir (22) due to the weight force of the lubricant (28).

4. A manipulator (10) in accordance with at least one of the preceding claims,
**characterized in that**
the protection device (12) is arranged peripherally around the output (16, 34, 36, 46) of the gear (14), with the reservoir (22) in particular likewise being arranged peripherally around the output (16, 34, 36, 46) of the gear (14).

5. A manipulator (10) in accordance with claim 5,
**characterized in that**
the reservoir (22) is formed by a peripheral recess.

6. A manipulator (10) in accordance with at least one of the preceding claims,
**characterized in that**
the reservoir (22) directly adjoins the gear housing (24).

7. A manipulator (10) in accordance with at least one of the preceding claims,
**characterized in that**
the protection device (12) comprises a deflection means (30, 48) which is attached to the output (16, 34, 36, 46) of the gear (14) and which is configured to conduct exiting lubricant (28) into the reservoir (22).

8. A manipulator (10) in accordance with at least one of the preceding claims,
**characterized by**
a sensor for recognizing lubricant (28) in the reservoir (22).

9. A manipulator (10) in accordance with at least one of the preceding claims,
**characterized in that**
a binding agent is provided in the reservoir (22) and at least partly binds the lubricant (28).

10. A manipulator (10) in accordance with at least one of the preceding claims,
**characterized in that**
the reservoir (22) comprises capillaries which receive the lubricant (28).

11. A manipulator (10) in accordance with at least one of the preceding claims,
**characterized in that**
the motor (44) is completely encapsulated and/or is an electric motor (44).

12. A manipulator (10) in accordance with at least one of the preceding claims,
**characterized in that**
the protection device (12) comprises a bearing (38) for the output (16, 34, 36, 46), with the output (16, 34, 36, 46) exiting the protection device (12) through the bearing (38).

13. A manipulator (10) in accordance with at least one of the preceding claims,
**characterized in that**
the protection device (12) and the gear (14) at least substantially have the same outer contour (43) in an end region remote from the motor (44).

## Revendications

1. Manipulateur (10), en particulier robot, de préférence robot delta, de préférence pour les environnements hygiéniques, comportant
un mécanisme de manipulateur (3, 4, 6), en particulier un bras de robot, un moteur (44),
un mécanisme de transmission (14) ayant un boîtier de transmission (24),
un volume prédéterminé d'un lubrifiant (28) étant présent dans le boîtier de transmission (24),
dans lequel
le mécanisme de transmission (14) est en liaison opérationnelle avec le moteur (44), et
le mécanisme de transmission (14) est réalisé pour entraîner le mécanisme de manipulateur (3, 4, 6) au moyen d'une sortie (16, 34, 36, 46),
un dispositif de protection (12) est fixé au boîtier de transmission (24) et comprend un réservoir (22) qui est réalisé pour recevoir en permanence le lubrifiant (28) s'échappant du mécanisme de transmission (14),
**caractérisé en ce que**
le réservoir (22) est conçu pour recevoir en permanence au moins 100 % du volume prédéterminé du lubrifiant (28).

2. Manipulateur (10) selon la revendication 1,
**caractérisé en ce que**
le mécanisme de transmission (14) et/ou le dispositif de protection (12) sont disposés de manière stationnaire, et le réservoir (22) est réalisé de telle sorte que le lubrifiant (28) qui s'échappe soit collecté dans le réservoir (22) uniquement en raison du poids du lubrifiant (28).

3. Manipulateur (10) selon l'une au moins des revendications précédentes,
**caractérisé en ce que**
le dispositif de protection (12) est réalisé de telle sorte que, malgré un changement de position du dispositif de protection (12) et/ou du mécanisme de transmission (14) allant jusqu'à 45°, le lubrifiant (28) qui s'échappe soit collecté dans le réservoir (22) en raison du poids du lubrifiant (28).

4. Manipulateur (10) selon l'une au moins des revendications précédentes,
**caractérisé en ce que**
le dispositif de protection (12) est disposé circonférentiellement autour de la sortie (16, 34, 36, 46) du mécanisme de transmission (14), le réservoir (22) étant en particulier également disposé circonférentiellement autour de la sortie (16, 34, 36, 46) du mécanisme de transmission (14).

5. Manipulateur (10) selon la revendication 5,
**caractérisé en ce que**
le réservoir (22) est formé par un retrait circonférentiel.

6. Manipulateur (10) selon l'une au moins des revendications précédentes,
**caractérisé en ce que**
le réservoir (22) se raccorde directement au boîtier de transmission (24).

7. Manipulateur (10) selon l'une au moins des revendications précédentes,
**caractérisé en ce que**
le dispositif de protection (12) comprend un moyen déflecteur (30, 48) monté sur la sortie (16, 34, 36, 46) du mécanisme de transmission (14) et conçu pour diriger le lubrifiant (28) qui s'échappe jusque dans le réservoir (22).

8. Manipulateur (10) selon l'une au moins des revendications précédentes,
**caractérisé par**
un capteur pour reconnaître un lubrifiant (28) présent dans le réservoir (22).

9. Manipulateur (10) selon l'une au moins des revendications précédentes,
**caractérisé en ce que**
un liant est prévu dans le réservoir (22), qui lie au moins partiellement le lubrifiant (28).

10. Manipulateur (10) selon l'une au moins des revendications précédentes,
**caractérisé en ce que**
le réservoir (22) comprend des capillaires qui reçoivent le lubrifiant (28).

11. Manipulateur (10) selon l'une au moins des revendications précédentes,
**caractérisé en ce que**
le moteur (44) est complètement encapsulé et/ou est un moteur électrique (44).

12. Manipulateur (10) selon l'une au moins des revendications précédentes,
**caractérisé en ce que**
le dispositif de protection (12) comprend un palier (38) pour la sortie (16, 34, 36, 46), la sortie (16, 34, 36, 46) sortant hors du dispositif de protection (12) à travers le palier (38).

13. Manipulateur (10) selon l'une au moins des revendications précédentes,
**caractérisé en ce que**
le dispositif de protection (12) et le mécanisme de transmission (14) ont au moins sensiblement le même contour extérieur (43) dans une zone d'extrémité détournée du moteur (44).
